# EUROPEAN PATENT SPECIFICATION

(11) **EP 2 802 761 B1**
(45) Date of publication and mention of the grant of the patent: **29.06.2016**
(21) Application number: 13704485.5
(22) Date of filing: 09.01.2013
(51) Int. Cl.: F02D 41/22, F02M 63/02

(54) **ABNORMALITY DETERMINATION APPARATUS AND ABNORMALITY DETERMINATION METHOD FOR FUEL SUPPLY SYSTEM**
ABWEICHUNGSBESTIMMUNGSVORRICHTUNG UND ABWEICHUNGSBESTIMMUNGSVERFAHREN FÜR EIN KRAFTSTOFFZUFUHRSYSTEM
APPAREIL DE DÉTERMINATION D'ANOMALIE ET PROCÉDÉ DE DÉTERMINATION D'ANOMALIE POUR SYSTÈME D'ALIMENTATION EN CARBURANT

(30) Priority: 13.01.2012 JP 2012005349
(43) Date of publication of application: 19.11.2014
(73) Proprietor: Toyota Jidosha Kabushiki Kaisha, Toyota-shi, Aichi-ken 471-8571 (JP); Denso Corporation, Kariya-shi, Aichi-ken 448-8661 (JP)
(72) Inventor: MIYAURA, Takeshi, Aichi-ken, 471-8571 (JP); ITO, Yoshiyasu, Aichi-ken, 471-8571 (JP); SUZUKI, Ryo, Aichi-ken, 471-8571 (JP); KAWASAKI, Yuusuke, Aichi-ken, 448-8661 (JP); YUN, Chusong, Aichi-ken, 448-8661 (JP); ARITA, Naoki, Aichi-ken, 448-8661 (JP)
(74) Representative: D Young & Co LLP
(86) International application number: PCT/IB2013/000073
(87) International publication number: WO 2013/104986

(56) References cited:
- EP-A2- 2 045 458
- GB-A- 2 311 817
- JP-A- H06 213 051
- JP-A- 2010 216 279

## Description

### BACKGROUND OF THE INVENTION

### 1. Field of the Invention

The invention relates to an abnormality determination apparatus and abnormality determination method that are designed for fuel supply systems and determines whether or not there has occurred an abnormality of fuel leakage in a fuel supply system that supplies fuel to respective cylinders of an internal combustion engine.

### 2. Description of Related Art

A fuel supply system of a direct injection-type internal combustion engine that directly injects and supplies fuel into respective cylinders is equipped with a pressure accumulation pipeline (a common rail and a delivery pipe) that stores fuel that has been pressurized by being force-fed by a pump, and fuel injection valves that are provided respectively for the cylinders and connected individually to a pressure accumulation container. These fuel injection valves are individually driven to be opened, whereby fuel is injected and supplied into the respective cylinders of the internal combustion engine at arbitrary timings.

It should be noted herein that there may occur an abnormality of leakage of fuel from the inside of the aforementioned fuel supply system to the outside thereof (an abnormality of fuel leakage). Conventionally, there have been proposed abnormality determination apparatuses that determine whether or not there has occurred such an abnormality of fuel leakage (e.g., see Japanese Patent Application Publication No. 6-213051 (JP-6-213051 A). In the event of the aforementioned abnormality of fuel leakage, the pressure of fuel in the fuel supply system decreases even when the fuel injection valves are not driven to be opened. Thus, the speed of decrease in the pressure of fuel inside the fuel supply system is higher than when there has not occurred an abnormality of fuel leakage. The apparatus described in the aforementioned Japanese Patent Application Publication No. 6-213051 (JP-6-213051 A) determines that there has occurred an abnormality of fuel leakage when a pressure of fuel inside such a fuel supply system (more specifically, a pressure accumulation pipeline) is detected and the degree of decrease in the fuel pressure is large.

In operating the internal combustion engine, the respective fuel injection valves are individually intermittently driven to be opened, and fuel is injected and supplied into the respective cylinders from inside the fuel supply system (more specifically, the fuel injection valves). Thus, the pressure of fuel in the fuel supply system pulsates as a result of the execution of such intermittent fuel injection. Accordingly, during the operation of the internal combustion engine, the pressure of fuel in the fuel supply system fluctuates due to a decrease in pressure resulting from fuel injection from the respective fuel injection valves and pulsation resulting from the intermittent execution of the fuel injection.

For this reason, even in the case where the degree of decrease in the pressure of fuel in the fuel supply system has become large as a result of detection of the fuel pressure with a view to determining whether or not there has occurred an abnormality of fuel leakage, it is difficult to determine whether the decrease in the fuel pressure is ascribable to the occurrence of an abnormality of fuel leakage or to pressure pulsation in the fuel supply system. Accordingly, even when a pressure of fuel in the pressure accumulation pipeline is simply detected, it is difficult to determine with high accuracy whether or not there has occurred an abnormality of fuel leakage.

### SUMMARY OF THE INVENTION

The invention provides an abnormality determination apparatus and an abnormality determination method for a fuel supply system which can accurately determine, on the basis of a pattern of decrease in fuel pressure, whether or not there has occurred an abnormality of leakage.

An abnormality determination apparatus in one aspect of the invention is applied to a fuel supply system that has a pressure accumulation container that stores fuel in a pressurized state, and fuel injection valves that are provided respectively for cylinders of a direct injection-type internal combustion engine and connected individually to the pressure accumulation container, and determines whether or not there has occurred an abnormality of fuel leakage in the fuel supply system.

The pressure of fuel in the fuel supply system temporarily decreases when the fuel injection valves are opened. Besides, when the fuel injection valves are closed, the fuel pressure is stopped from decreasing due to such fuel injection, but the fuel pressure pulsates immediately thereafter, and the pressure of fuel in the fuel supply system continues to fluctuate for a while. However, if attention is focused only on the pressure of fuel in a region that links the fuel injection valve that injects fuel into one of the cylinders (the specific cylinder) with a pressure accumulation pipeline, pressure pulsation is caused immediately after the fuel injection valve is driven to be closed. However, the pressure pulsation almost converges by the time a timing when the fuel injection valve is driven to be opened (more specifically, a timing corresponding to an intermediate point between a compression top dead center of the cylinder that immediately precedes in ignition sequence [an immediately preceding cylinder] and a compression top dead center of the specific cylinder) is reached again.

In the aforementioned abnormality determination apparatus, pressure detection portions for detecting fuel pressures in regions (specific regions) between regions that are located closer to the fuel injection valve sides than the pressure accumulation container inside the fuel supply system and injection holes of the fuel injection valves are provided respectively for the cylinders of the internal combustion engine. Thus, pressures of fuel in regions that link the respective fuel injection valves with the pressure accumulation pipeline can be detected individually by those pressure detection portions.

Moreover, in the forementioned abnormality determination apparatus, in a detection period from an intermediate timing between respective compression top dead center timings of two of the cylinders that are successive to each other in ignition sequence (e.g., the aforementioned immediately preceding cylinder and the specific cylinder) to a timing immediately before start of fuel injection into that one of those cylinders which is later in ignition sequence (the specific cylinder), a pressure of fuel in the aforementioned specific region is detected by the pressure detection portion that is provided for the cylinder that is later in ignition sequence. It is then determined, on the basis of a pattern of decrease in the detected fuel pressure in the specific region, whether or not there has occurred an abnormality of fuel leakage in the fuel supply system. Thus, a pressure of fuel in the aforementioned specific region during a period in which the amplitude of fluctuations in fuel pressure resulting from fuel injection from the fuel injection valves has become small is detected, and it is determined whether or not there has occurred an abnormality of fuel leakage in the fuel supply system. Thus, a decrease in fuel pressure resulting from the occurrence of an abnormality of fuel leakage can be properly captured. Thus, it can be accurately determined, on the basis of a pattern of decrease in fuel pressure, whether or not there has occurred an abnormality of leakage.

In the aforementioned abnormality determination apparatus, a speed of decrease in fuel pressure during the detection period may be calculated as the pattern of decrease, and it may be determined that there has occurred an abnormality of fuel leakage when the speed of decrease is higher than a predetermined criterial speed. Thus, it can be determined that there has occurred an abnormality of fuel leakage, on the condition that the speed of decrease in fuel pressure be high as a result of the leakage of fuel from inside the fuel supply system.

If it is assumed that a certain error has occurred in one of the detected values of fuel pressure in calculating a speed of decrease in the fuel pressure during the detection period, the influence of the error increases as the detection period decreases. Accordingly, it is concluded that the accuracy in determining whether or not there has occurred an abnormality of fuel leakage is lower when the detection period is short than when the detection period is long.

In the aforementioned abnormality determination apparatus, the speed of decrease in fuel pressure during the detection period may be changed on the basis of the length of the detection period. Thus, for example, when the detection period is short, the influence on the aforementioned speed of decrease is great, and hence, the likelihood of determining that there has occurred an abnormality of fuel leakage may be reduced by changing the speed of decrease to a low speed. In this manner, the speed of decrease can be changed in accordance with the degree of influence of the length of the detection period on the aforementioned speed of decrease, and it can be suitably determined, on the basis of the changed speed of decrease, whether or not there has occurred an abnormality of fuel leakage.

The speed of decrease in fuel pressure during the detection period increases as the absolute value of the fuel pressure during the detection period increases. In the aforementioned abnormality determination apparatus, the speed of decrease in fuel pressure during the detection period may be changed on the basis of the absolute value of the fuel pressure during the detection period. Thus, for example, when the absolute value of the fuel pressure during the detection period is high, the aforementioned speed of decrease is high, and hence, the likelihood of determining that there has occurred an abnormality of fuel leakage may be reduced by changing the speed of decrease to a low speed. In this manner, the speed of decrease can be changed in accordance with the relationship between the absolute value of the fuel pressure and the unchanged speed of decrease, and it can be suitably determined, on the basis of the changed speed of decrease, whether or not there has occurred an abnormality of fuel leakage.

As described above, when the detection period is short, the accuracy in determining whether or not there has occurred an abnormality of fuel leakage is lower than when the detection period is long. Accordingly, it is concluded that the accuracy in determining whether or not there has occurred an abnormality of fuel leakage increases as the detection period lengthens. When fuel cut control is performed to temporarily stop fuel injection from the fuel injection valves, the fuel injection valves are not driven to be opened, and hence, the fuel pressure does not fluctuate as a result of the driving of the fuel injection valves in the valve-opening direction. Thus, even when the detection period is set to a long period, a deterioration in the accuracy of determination is not caused as a result of fuel injection from the fuel injection valves.

In the aforementioned abnormality determination apparatus, as a detection period during the performance of such fuel cut control, a period whose start point is an intermediate timing between a compression top dead center timing of the cylinder that immediately precedes the specific cylinder in ignition sequence and a compression top dead center timing of the specific cylinder and whose end point is an intermediate timing between the compression top dead center timing of the specific cylinder and a compression top dead center timing of the cylinder that immediately follows the specific cylinder in ignition sequence is determined. In addition, a fuel pressure may be detected by the pressure detection portion that is provided for the specific cylinder during this detection period, and it may be determined, on the basis of a pattern of decrease in the detected fuel pressure, whether or not there has occurred an abnormality of fuel leakage in the fuel supply system.

According to this device, as a detection period during the performance of fuel cut control, a period that does not cause a deterioration in the accuracy of determination resulting from fuel injection from the fuel injection valves and that is longer than when the fuel cut control is not performed can be determined. Accordingly, it can be determined with high accuracy whether or not there has occurred an abnormality of fuel leakage.

In the aforementioned abnormality determination apparatus, the fuel injection valves may be fitted with pressure sensors as the pressure detection portions. Each of the pressure sensors can detect a fuel pressure in a region that is close to an injection hole of a corresponding one of the fuel injection valves to which that pressure sensor is fitted and that is far from injection holes of the other fuel injection valves. Thus, as a fuel pressure detected by each of the pressure sensors, a value with a reduced influence of fluctuations in the fuel pressure that are caused as the fuel injection valves provided in a manner corresponding to the other cylinders are driven to be opened/closed can be detected. For this reason, in the aforementioned abnormality determination apparatus, the amplitude of fluctuations in the fuel pressure during the detection period is smaller than in an apparatus that detects fuel pressures in regions that are far from the fuel injection valves. Therefore, it can be accurately determined whether or not there has occurred an abnormality of fuel leakage.

An abnormality determination method for a fuel supply system in one aspect of the invention, wherein the fuel supply system has a pressure accumulation container that stores fuel in a pressurized state, and fuel injection valves that are provided respectively for cylinders of a direct injection-type internal combustion engine and connected individually to the pressure accumulation container, the abnormality determination method includes: detecting, during a detection period from an intermediate timing between respective compression top dead center timings of two of the cylinders that are successive to each other in ignition sequence to a timing immediately before start of fuel injection into that one of those cylinders which is later in ignition sequence, fuel pressure in region between region that is located closer to the fuel injection valve side than the pressure accumulation container and injection hole of the fuel injection valve inside the fuel supply system corresponding to the cylinder that is later in ignition sequence; and determining whether or not there has occurred an abnormality of fuel leakage on a basis of a pattern of decrease in the detected fuel pressure.

### BRIEF DESCRIPTION OF THE DRAWINGS

Features, advantages, and technical and industrial significance of an exemplary embodiment of the invention will be described below with reference to the accompanying drawings, in which like numerals denote like elements, and wherein:
FIG. 1 is a schematic diagram showing an overall configuration of an internal combustion engine to which an abnormality determination apparatus according to one embodiment as a concrete form of the invention is applied;
FIG. 2 is a cross-sectional view showing a cross-sectional structure of a fuel injection valve;
FIG 3A to 3C is a timing chart showing an example of a relationship between drive pulse and fuel pressure;
FIG. 4A to 4C is a timing chart showing an example of a relationship between drive pulse and fuel pressure at a time when pilot injection is executed;
FIG. 5A to 5C is a timing chart showing an example of a relationship between drive pulse and fuel pressure at a time when fuel cut control is performed; and
FIG. 6 is a flowchart showing a procedure of performing a determination processing.

### DETAILED DESCRIPTION OF EMBODIMENT

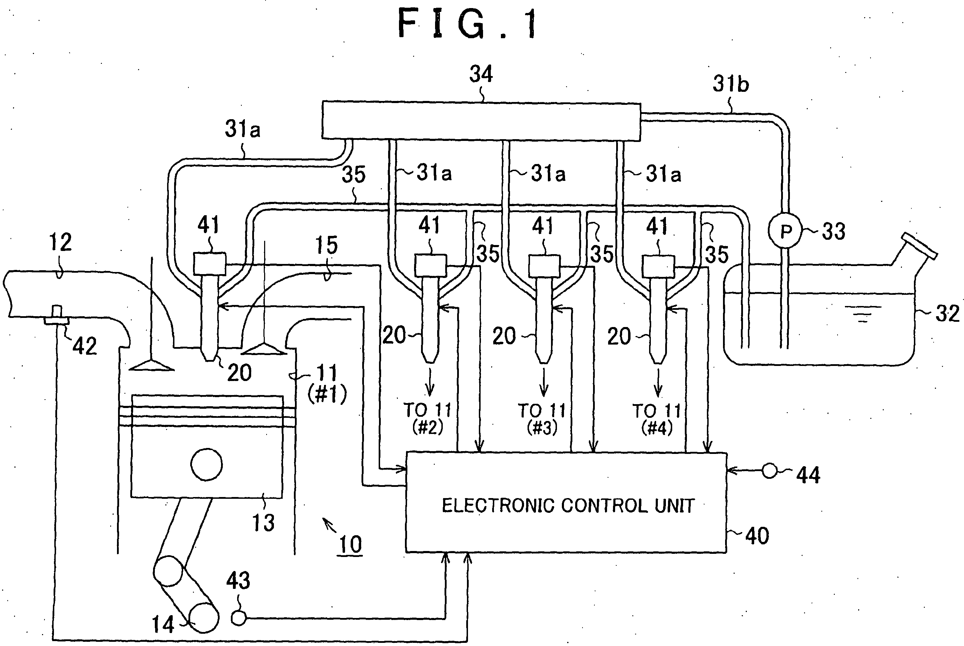

An abnormality determination apparatus for a fuel supply system according to one embodiment as a concrete form of the invention will be described hereinafter. As shown in FIG. 1, an intake passage 12 is connected to cylinders 11 of an internal combustion engine 10. Air is sucked into the cylinders 11 of the internal combustion engine 10 via the intake passage 12. Incidentally, a diesel engine having a plurality of (four [#1 to #4] in this embodiment of the invention) the cylinders 11 is adopted as this internal combustion engine 10. The internal combustion engine 10 is fitted with direct injection-type fuel injection valves 20 that directly inject fuel into the cylinders 11, for the cylinders 11 respectively. Fuel injected through the driving of these fuel injection valves 20 in the valve-opening direction comes into contact with intake air that has been compressed and heated in the cylinders 11 of the internal combustion engine 10, ignites, and burns. Then in the internal combustion engine 10, a piston 13 is depressed due to the energy that is generated as fuel bums in each of the cylinders 11, and a crankshaft 14 is forcibly rotated. Combustion gas burned in the cylinders 11 of the internal combustion engine 10 is discharged to an exhaust passage 15 of the internal combustion engine 10 as exhaust gas.

The respective fuel injection valves 20 are individually connected to a common rail 34 via branch passages 31a. The common rail 34 is connected to a fuel tank 32 via a supply passage 31b. This supply passage 31b is provided with a fuel pump 33 that force-feds fuel. In this embodiment of the invention, fuel that has been raised in pressure by being force-fed by a fuel pump 33 is stored in the common rail 34, and is supplied into the respective fuel injection valves 20.

The fuel pump 33 is driven by a camshaft of the internal combustion engine 10. The fuel pump 33 is structured to force-feed fuel once every time the camshaft rotates by 360° (every time fuel injection is executed in two of the cylinders 11). Fuel is force-fed from this fuel pump 33 during a period immediately after the completion of fuel injection from the fuel injection valves 20.

Return passages 35 are connected to the fuel injection valves 20 respectively. The respective return passages 35 are connected to a fuel tank 32. Part of fuel inside the fuel injection valves 20 is returned to the fuel tank 32 via these return passages 35 respectively. Incidentally, in this embodiment of the invention, the common rail 34 functions as a pressure accumulation container, and the respective fuel injection valves 20, the respective branch passages 31a, the supply passage 31b, and the common rail 34 constitute the fuel supply system. Besides, in this embodiment of the invention, the amplitude of fluctuations in the pressure of fuel inside the fuel supply system, which result from the operation of the fuel pump 33, becomes extremely small by the time the crank angle (°CA) becomes equal to ATDC 90°CA (90°CA in the case where the compression top dead center is 0°CA).

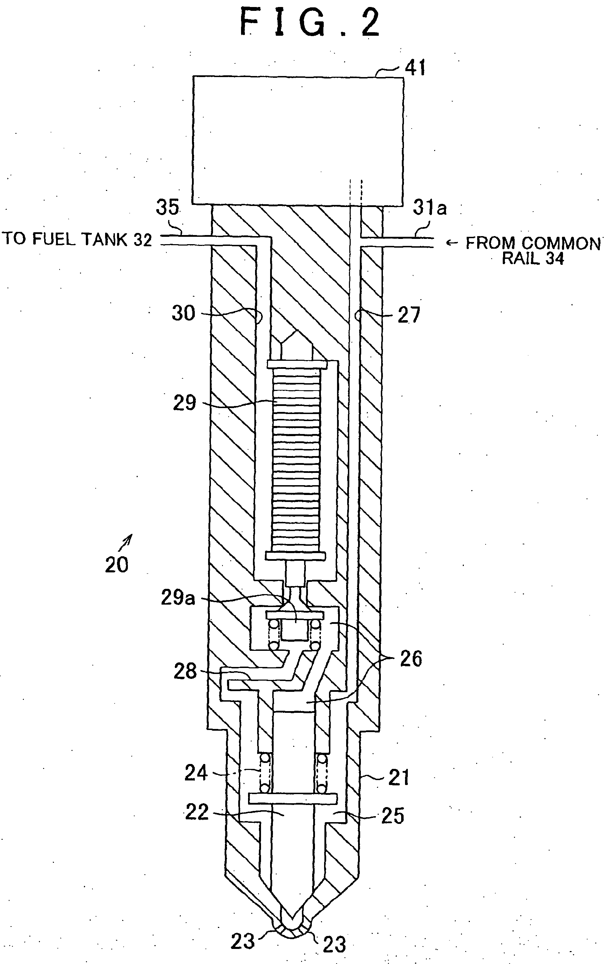

The internal structure of the fuel injection valves 20 will be described hereinafter. FIG. 2 shows a cross-sectional structure of each of the fuel injection valves 20. As shown in FIG. 2, a needle valve 22 is provided inside a housing 21 of the fuel injection valve 20. This needle valve 22 is provided movably in a reciprocating manner (movably vertically in FIG 2) in the housing 21. A spring 24 that constantly urges the aforementioned needle valve 22 toward injection hole 23 sides (downward in FIG. 2) is provided inside the housing 21. Besides, inside the housing 21, a nozzle chamber 25 is formed at a position located on one side (on a lower side in FIG 2) across the aforementioned needle valve 22, and a pressure chamber 26 is formed at a position located on the other side (on an upper side in FIG. 2).

The injection holes 23 through which the interior of the nozzle chamber 25 communicates with the outside of the housing 21 are formed through the nozzle chamber 25. Fuel is supplied to the nozzle chamber 25 from the aforementioned branch passage 31a (the common rail 34) via an introduction passage 27. The aforementioned nozzle chamber 25 and the branch passage 31a (the common rail 34) are connected to the pressure chamber 26 via a communication passage 28. Besides, the pressure chamber 26 is connected to the return passage 35 (the fuel tank 32) via a discharge passage 30.

An electrically driven fuel injection valve is adopted as the aforementioned fuel injection valve 20. A piezoelectric actuator 29 constructed by laminating piezoelectric elements that expand and contract as a drive signal is input thereto is provided inside the housing 21 of the fuel injection valve 20. This piezoelectric actuator 29 is fitted with a valve body 29a. The valve body 29a is provided inside the pressure chamber 26. Then, due to the movement of the valve body 29a resulting from the operation of the piezoelectric actuator 29, one of the communication passage 28 (the nozzle chamber 25) and the discharge passage 30 (the return passage 35) is selectively brought into communication with the pressure chamber 26.

In this fuel injection valve 20, when a valve-closing signal is input to the piezoelectric actuator 29, the piezoelectric actuator 29 contracts, the valve body 29a moves, and the communication passage 28 and the pressure chamber 26 are brought into communication with each other. Then, the return passage 35 and the pressure chamber 26 are brought out of communication with each other (a state shown in FIG. 2). Thus, with fuel in the pressure chamber 26 prohibited from being discharged to the return passage 35 (the fuel tank 32), the nozzle chamber 25 and the pressure chamber 26 are brought into communication with each other. Thus, the difference between the pressure of the nozzle chamber 25 and the pressure of the pressure chamber 26 becomes considerably small, and the needle valve 22 moves to such a position as to block up the injection holes 23 through an urging force of the spring 24. At this moment, the fuel injection valve 20 assumes a state in which no fuel is injected therefrom (a closed-valve state).

On the other hand, when a valve-opening signal is input to the piezoelectric actuator 29, the piezoelectric actuator 29 expands, the valve body 29a moves, and the communication passage 28 and the pressure chamber 26 are brought out of communication with each other. Then, the return passage 35 and the pressure chamber 26 are brought into communication with each other. Thus, with fuel prohibited from flowing out from the nozzle chamber 25 to the pressure chamber 26, part of the fuel in the pressure chamber 26 is returned to the fuel tank 32 via the return passage 35. Thus, the pressure of fuel in the pressure chamber 26 decreases, and the difference between the pressure of the pressure chamber 26 and the pressure of the nozzle chamber 25 becomes large. Due to this pressure difference, the needle valve 22 moves against the urging force of the spring 24, and leaves the injection holes 23. At this moment, the fuel injection valve 20 assumes a state in which fuel is injected therefrom (an open-valve state).

The fuel injection valve 20 is integrally fitted with a pressure sensor 41 that outputs a signal corresponding to a fuel pressure PQ inside the aforementioned introduction passage 27. Thus, a fuel pressure in a region closer to the injection holes 23 of the fuel injection valve 20 can be detected, in comparison with an apparatus designed to detect a fuel pressure at a position located apart from the fuel injection valve 20, for example, a fuel pressure in the common rail 34 (see FIG 1) or the like. Incidentally, the aforementioned pressure sensor 41 is provided for each of the fuel injection valves 20, namely, for each of the cylinders 11 of the internal combustion engine 10. Thus, fuel pressures PQ inside the fuel injection valves 20 provided for the cylinders 11 of the internal combustion engine 10 respectively can be detected individually by those pressure sensors 41.

As shown in FIG. 1, the internal combustion engine 10 is provided, as peripheral components thereof, with various sensors for detecting an operation state. The internal combustion engine 10 is also provided, as those sensors, with, for example, an intake air amount sensor 42 for detecting an amount of air passing through the intake passage 12 (a passage air amount GA), and a crank sensor 43 for detecting a rotational speed of the crankshaft 14 (an engine rotational speed NE) as well as the aforementioned pressure sensor 41. Moreover, the internal combustion engine 10 is also provided with an accelerator sensor 44 for detecting an operation amount of an accelerator operation member (e.g., an accelerator pedal) (an accelerator operation amount ACC), and the like.

Besides, as peripheral components of the internal combustion engine 10, an electronic control unit 40 that is configured to be equipped with, for example, a microcomputer, and the like are also provided. This electronic control unit 40 fetches output signals of the various sensors. In the apparatus according to this embodiment of the invention, the output signal of the pressure sensor 41 is fetched into the electronic control unit 40 on a considerably short cycle (e.g., from several microseconds to ten-odd microseconds). The electronic control unit 40 performs various calculations on the basis of output signals of the various sensors, and performs various kinds of control regarding the operation of the internal combustion engine 10, such as operation control of the fuel injection valves 20 (fuel injection control), operation control of the fuel pump 33 (fuel pressure control), and the like, in accordance with results of the calculations.

Fuel injection control of this embodiment of the invention is performed as follows. That is, an injection pattern is first selected on the basis of an engine operation state including the passage air amount GA, the engine rotational speed NE, the fuel pressure PQ, the accelerator operation amount ACC, and the like, and various control target values concerning respective types of injection according to the injection pattern are calculated. Then, the respective fuel injection valves 20 are individually driven to be opened in accordance with those control target values. Thus, fuel is injected from each of the fuel injection valves 20 according to an injection pattern suited for an engine operation state on each occasion and in an amount corresponding to the engine operation state, and is supplied into a corresponding one of the cylinders 11. Incidentally, in this embodiment of the invention, a plurality of injection patterns as a combination of main injection, pilot injection, and the like are set in advance and stored into the electronic control unit 40. In performing fuel injection control, one of those injection patterns is selected. Besides, as, the various control target values, control target values concerning fuel injection amounts of the respective types of injection such as main injection, pilot injection, and the like, and control target values concerning fuel injection timings of the various types of injection such as an injection timing of main injection, a pilot interval, and the like are calculated.

Besides, in this embodiment of the invention, the control of temporarily stopping fuel from being supplied to the internal combustion engine 10 for the sake of the operation of the internal combustion engine 10, namely, to cause the internal combustion engine 10 to generate a torque, that is, so-called fuel cut control is performed in a situation where there is no need to cause the internal combustion engine 10 to output a torque (e.g., during decelerative operation or the like). This fuel cut control is performed upon fulfillment of a condition that the engine rotational speed NE have decreased with an accelerator operation member not operated (the accelerator operation amount ACC = "0") or the like.

Besides, in this embodiment of the invention, fuel pressure control is performed as follows. That is, first of all, a control target value about the pressure of fuel in the common rail 34 (a target fuel pressure) is calculated on the basis of the passage air amount GA and the engine rotational speed NE. Then, the actuation amount of the fuel pump 33 (a fuel force-feed amount or a fuel return amount) is adjusted such that the actual fuel pressure becomes equal to the target fuel pressure). The pressure of fuel in the common rail 34, in other words, the pressure of fuel injection from the fuel injection valves 20 is adjusted to a pressure corresponding to the engine operation state, through this adjustment of the actuation amount of the fuel pump 33.

It should be noted herein that an abnormality of the leakage of fuel from inside the fuel supply system to the outside thereof (an abnormality of fuel leakage) may occur in the apparatus according to this embodiment of the invention. In the event of the abnormality of fuel leakage, an appropriate measure needs to be taken thereagainst.

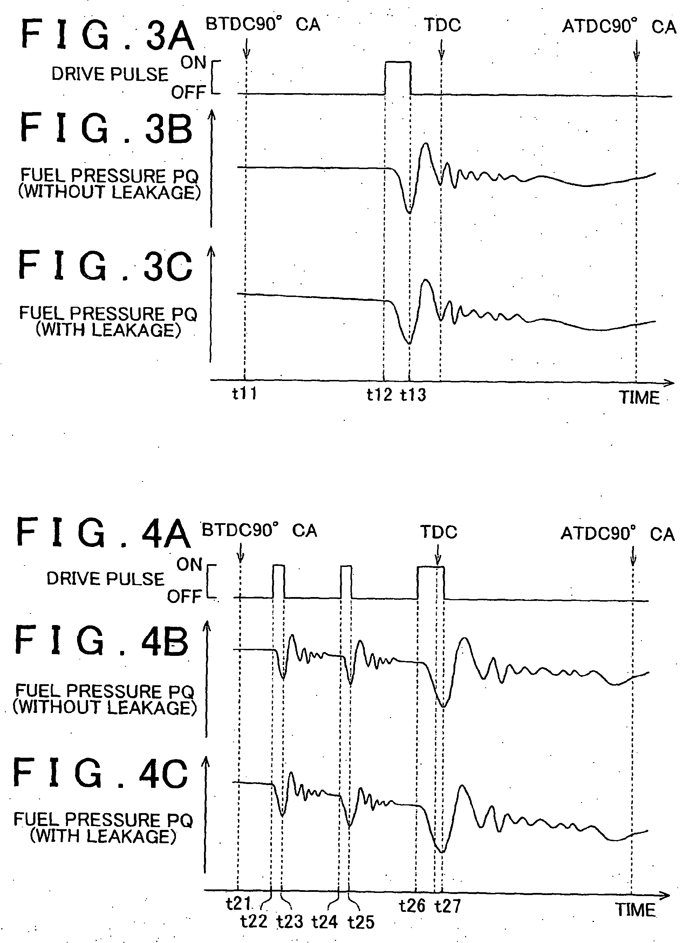

FIG 3A to 3C shows an example of a relationship between a drive pulse that is output to each of the fuel injection valves 20 and a fuel pressure PQ that is detected by the pressure sensor 41 fitted to the fuel injection valve 20. It should be noted in FIG. 3A indicates an output pattern of the drive pulse, FIG 3B indicates how the fuel pressure PQ changes in the case where there has not occurred an abnormality of fuel leakage, and FIG 3C indicates how the fuel pressure PQ changes in the case where there has occurred an abnormality of fuel leakage.

As indicated by FIG. 3A to 3C, in the event of an abnormality of fuel leakage, the fuel pressure PQ decreases when the fuel injection valves 20 are closed as well. Thus, when there has occurred an abnormality of fuel leakage, the speed of decrease in the fuel pressure PQ is higher than when there has not occurred an abnormality of fuel leakage as indicated by FIG. 3A and 3B. Thus, in the apparatus according to this embodiment of the invention, it is basically determined that the aforementioned abnormality of fuel leakage has occurred when the speed of decrease in the fuel pressure PQ is higher than a predetermined criterial speed JV.

Meanwhile, the respective fuel injection valves 20 are intermittently driven to be opened during the operation of the internal combustion engine 10, and fuel is injected and supplied into the cylinders 11 from inside the fuel supply system. Thus, the pressure of fuel in the fuel supply system pulsates as a result of such intermittent execution of fuel injection. Accordingly, it is concluded that the pressure of fuel in the fuel supply system during the operation of the internal combustion engine 10 fluctuates due to a pressure decrease resulting from fuel injection from the fuel injection valves 20 and pulsations resulting from the intermittent execution of the fuel injection. For this reason, even in the case where the speed of decrease in the fuel pressure PQ is higher than the criterial speed as a result of detecting the fuel pressure PQ to determine whether or not there has occurred an abnormality of fuel leakage, it is difficult to determine whether the decrease in the fuel pressure PQ is ascribable to the occurrence of an abnormality of fuel leakage or to pressure pulsations in the fuel supply system. Accordingly, it is concluded that it is difficult to determine with high accuracy whether or not there has occurred an abnormality of fuel leakage even when the fuel pressure PQ is simply detected.

In view of this, in this embodiment of the invention, as a detection period for detecting the fuel pressure PQ that is used to determine whether or not there has occurred an abnormality of fuel leakage, a period from an intermediate timing between respective compression top dead center timings in two of the cylinders 11 that are successive to each other in ignition sequence to a timing immediately before the start of injection of fuel into that one of the cylinders 11 which is later in ignition sequence (a specific cylinder) (from a time point t11 to a time point t12 in an example shown in FIG. 3) is determined. In addition, during the detection period, the fuel pressure PQ is detected by the pressure sensor 41 that is provided in a manner corresponding to the aforementioned specific cylinder (i.e., the pressure sensor 41 fitted to the fuel injection valve 20 that injects and supplies fuel into the specific cylinder), and it is determined, on the basis of the speed of decrease in the fuel pressure PQ, whether or not there has occurred an abnormality of fuel leakage.

The aforementioned internal combustion engine 10 is equipped with the four cylinders 11, and the ignition sequence of the cylinders 11 is determined as "the cylinder 11 [#1] → the cylinder 11 [#3] → the cylinder 11 [#4] → the cylinder 11 [#2]". Thus, in the case where the aforementioned "two cylinders that are successive to each other in ignition sequence" are determined as the cylinders 11 [#1] and [#3], "the intermediate timing between the respective compression top dead centers in the two cylinders 11 that are successive to each other in ignition sequence" is ATDC 90°CA of the cylinder 11 [#1] or BTDC 90°CA of the cylinder 11 [#3] (-90°CA in the case where the compression top dead center [TDC] is determined as 0°CA). Besides, in this case, the aforementioned "timing immediately before the start of fuel injection into the cylinder 11 that is later in ignition sequence" is a timing immediately before the start of fuel injection into the cylinder 11 [#3] (more specifically, a timing when a drive pulse is output from the electronic control unit 40 to the fuel injection valve 20 fitted to the cylinder 11 [#3]).

When the fuel injection valves 20 are opened (from a time point t12 to a time point t13 in FIG. 3), the fuel pressure PQ temporarily decreases. Besides, when the fuel injection valves 20 are driven to be closed, the fuel pressure PQ stops decreasing as a result of such fuel injection. However, the fuel pressure PQ pulsates immediately thereafter, and keeps fluctuating for a while.

Attention will now be focused only on the fuel pressure PQ detected by the pressure sensor 41 that is provided in a manner corresponding to one of the cylinders (the specific cylinder). In this case, immediately after the fuel injection valve 20 that injects and supplies fuel to the specific cylinder is driven to be closed, the fuel pressure PQ pulsates (at and after the time point t13). However, this pulsation of the fuel pressure PQ almost converges by the time the timing when fuel is injected again into the specific cylinder subsequently to fuel injection into the three cylinders other than the specific cylinder is reached, more specifically, by the time BTDC 90°CA (at the time point t11) of the specific cylinder is reached.

In the apparatus according to this embodiment of the invention, during a detection period (from the time point t11 to the time point t12) from BTDC 90°CA of the specific cylinder to the timing immediately before the start of fuel injection into the specific cylinder, the fuel pressure PQ is detected by the pressure sensor 41 that is provided in a manner corresponding to the specific cylinder, and it is determined, on the basis of the speed of decrease in the fuel pressure PQ, whether or not there has occurred an abnormality of fuel leakage in the fuel supply system. Thus, during a period in which the amplitude of fluctuations in the fuel pressure PQ resulting from fuel injection from the fuel injection valves 20 has become small through convergence, the fuel pressure PQ is detected, and it is determined whether or not there has occurred an abnormality of fuel leakage in the fuel supply system. Thus, a decrease in the fuel pressure PQ resulting from the occurrence of an abnormality of fuel leakage can be properly captured. Thus, it can be accurately determined, on the basis of the speed of decrease in the fuel pressure PQ, whether or not there has occurred an abnormality of leakage.

In the apparatus according to this embodiment of the invention, the pressure sensors 41 are integrally fitted to the fuel injection valves 20 respectively. Thus, the fuel pressure PQ in a region that is close to the injection holes 23 of each of the fuel injection valves 20 to which a corresponding one of the pressure sensors 41 is integrally fitted and that is far from the injection holes 23 of the other fuel injection valves 20 can be detected by the corresponding one of the pressure sensors 41. Thus, as the fuel pressure PQ detected by each of the pressure sensors 41, a value with a reduced influence of fluctuations in fuel pressure that are caused as the fuel injection valves 20 provided in a manner corresponding to the other cylinders 11 are driven to be opened/closed can be detected. In this view, in the apparatus according to this embodiment of the invention, the amplitude of fluctuations in the fuel pressure PQ during the aforementioned detection period is smaller than in an apparatus that detects a fuel pressure in a region that is far from the fuel injection valves 20. Therefore, it can be accurately determined whether or not there has occurred an abnormality of fuel leakage.

In determining whether or not there has occurred an abnormality of fuel leakage, an amount of decrease (a speed V of decrease) in the fuel pressure PQ per unit period during the aforementioned detection period is first calculated. More specifically, when the length of the detection period is determined after a drive pulse is output to the fuel injection valve 20 corresponding to the specific cylinder, a plurality of (e.g., five) detection points that are substantially equal in crank angle interval to one another during the detection period are determined, and the fuel pressures PQ at those detection points are read respectively. After that, a primary function that is different from each of the fuel pressures PQ by a smallest value is obtained using the least-square method, and a gradient of this primary function (more specifically, a value equivalent to the speed of decrease in the fuel pressure PQ in response to a change in crank angle) is calculated and stored as the speed V of decrease in the fuel pressure PQ.

Then, in the apparatus according to this embodiment of the invention, it is determined that there has occurred an abnormality of fuel leakage when this speed V of decrease is higher than the predetermined criterial speed JV. Thus, it is determined that there has occurred an abnormality of fuel leakage when the speed V of decrease in the fuel pressure PQ has become high as a result of the leakage of fuel from inside the fuel supply system. Incidentally, such a control structure regarding a determination on whether or not there has occurred an abnormality of fuel leakage can be realized because output signals of the respective pressure sensors 41 are fetched into the electronic control unit 40 on a considerably short cycle.

Further, in the apparatus according to this embodiment of the invention, prior to a comparison between the speed V of decrease in the fuel pressure PQ and the criterial speed JV, the speed V of decrease is changed on the basis of the length of the aforementioned determination period and the absolute value of the fuel pressure PQ during the determination period (more specifically, BTDC 90°CA). This is because of the following reason.

FIG 4A to 4C shows an example of a relationship between a drive pulse that is output to the fuel injection valves 20 during the execution of pilot injection and the fuel pressure PQ that is detected by the pressure sensors 41 fitted to the fuel injection valves 20. Incidentally, FIG. 4A indicates an output pattern of the drive pulse, FIG 4B indicates how the fuel pressure PQ changes in the case where there has not occurred an abnormality of fuel leakage, and FIG. 4C indicates how the fuel pressure PQ changes in the care where there has occurred an abnormality of fuel leakage.

As indicated by FIG. 4A to 4C, the detection period (from a time point t21 to a time point t22) in the case where pilot injection (from a time point t22 to a time point t23, and from a time point t24 to a time point t25) is executed prior to the execution of main injection (from a time point t26 to a time point t27) is shorter than a detection period (see a period from the time point t11 to the time point t12 in FIG. 3) in the case where the pilot injection is not executed. In this manner, in the apparatus according to this embodiment of the invention, the length of the detection period differs depending on the operation state of the internal combustion engine 10.

In calculating the speed V of decrease in the fuel pressure PQ during the detection period as described above, it is assumed that there has occurred a certain error in one of the detected values of the fuel pressure PQ used for this calculation. In this case, the influence of the error on the speed V of decrease (more specifically, the degree of deviation from an appropriate value) increases as the detection period shortens. Accordingly, when the detection period is short, the accuracy in determining whether or not there has occurred an abnormality of fuel leakage is lower than when the detection period is long.

With this point taken into account, in this embodiment of the invention, the aforementioned speed V of decrease is changed in such a manner as to decrease as the detection period shortens. Thus, as the detection period shortens and the influence on the aforementioned speed V of decrease increases, the speed to which the speed V of decrease is changed is reduced, and the likelihood of determining that there has occurred an abnormality of fuel leakage is reduced. Thus, it can be restrained from being erroneously determined that there is an abnormality of fuel leakage although there is actually no abnormality of fuel leakage. In this manner, according to this embodiment of the invention, the speed V of decrease is changed in accordance with the degree of the influence of the length of the detection period on the aforementioned speed V of decrease. Therefore, it can be suitably determined, on the basis of the changed speed V of decrease, whether or not there has occurred an abnormality of fuel leakage.

Besides, when the absolute value of the fuel pressure PQ during the detection period is high, the actual speed of decrease in the fuel pressure PQ during the detection period is higher than when the absolute value of the fuel pressure PQ is low. Thus, when the speed V of decrease is calculated on the basis of the fuel pressures PQ at the plurality of the detection points as described above, a high speed is calculated as the speed V of decrease. When a high speed is thus calculated as the speed V of decrease, it is likely to be determined that there has occurred an abnormality of fuel leakage, because it is determined that there has occurred an abnormality of fuel leakage when the speed V of decrease in the fuel pressure PQ has become higher than the criterial speed JV in the apparatus according to this embodiment of the invention.

With this point taken into account, in this embodiment of the invention, the speed V of decrease is changed in such a manner as to decrease as the fuel pressure PQ during the detection period (more specifically, at a start point of the detection period [BTDC 90°CA]) increases. Thus, the speed V of decrease is changed to a low speed at which the likelihood of determining that there has occurred an abnormality of fuel leakage decreases as the aforementioned unchanged speed V of decrease increases due to the high fuel pressure PQ during the detection period. In this manner, according to this embodiment of the invention, the speed V of decrease is changed in accordance with the relationship between the unchanged speed V of decrease and the absolute value of the fuel pressure PQ during the detection period. Therefore, it can be suitably determined, on the basis of the changed speed V of decrease, whether or not there has occurred an abnormality of fuel leakage.

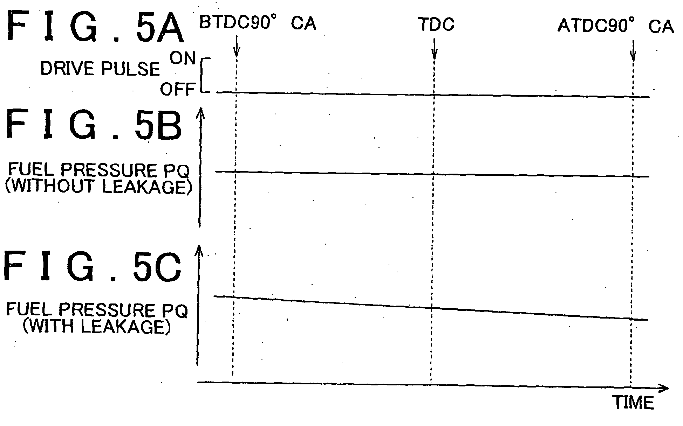

Furthermore, in this embodiment of the invention, when fuel cut control is performed, the detection period is determined as follows. FIG. 5A to 5C shows an example of a relationship between a drive pulse output to the fuel injection valve 20 that injects and supplies fuel to the specific cylinder during the performance of fuel cut control and the fuel pressure PQ detected by the pressure sensor 41 that is fitted to the fuel injection valve 20. Incidentally, FIG 5A indicates an output pattern of the drive pulse, FIG 5B indicates how the fuel pressure PQ changes in the case where there has not occurred an abnormality of fuel leakage, and FIG 5C indicates how the fuel pressure PQ changes in the case where there has occurred an abnormality of fuel leakage.

As indicated by FIG 5A to 5C, when fuel cut control is performed, a period whose start point is an intermediate timing (BTDC 90°CA) between a compression top dead center timing of the cylinder that immediately precedes the specific cylinder in ignition sequence and a compression top dead center timing of the specific cylinder and whose end point is an intermediate timing (ATDC 90°CA) between the compression top dead center timing of the specific cylinder and a compression top dead center timing of the cylinder that immediately follows the specific cylinder in ignition sequence is determined as the aforementioned detection period. Incidentally, if it is assumed that "the cylinder that immediately precedes the specific cylinder in ignition sequence" is the cylinder 11 [#1], that "the specific cylinder" is the cylinder 11 [#3], and that "the cylinder that immediately follows the specific cylinder in ignition sequence" is the cylinder 11 [#4], "the intermediate timing between the compression top dead center timing of the cylinder that immediately precedes the specific cylinder in ignition sequence and the compression top dead center timing of the specific cylinder" is BTDC 90°CA of the cylinder 11 [#3]. Besides, in this case, the aforementioned "intermediate timing between the compression top dead center timing of the specific cylinder and the compression top dead center timing of the cylinder that immediately follows the specific cylinder in ignition sequence" is ATDC 90°CA of the cylinder 11 [#3], and the detection period is a period from BTDC 90°CA of the cylinder 11 [#3] to ATDC 90°CA of the cylinder 11 [#3].

When the detection period is short as described above, the accuracy in determining whether or not there has occurred an abnormality of fuel leakage is lower than when the detection period is long. Thus, the accuracy in determining whether or not there has occurred an abnormality of fuel leakage can be increased as the detection period lengthens. When fuel cut control is performed, the fuel injection valves 20 are not driven to be opened, and hence the fuel pressure PQ does not fluctuate as a result of the driving of the fuel injection valves 20 in the valve-opening direction. Thus, even when the detection period is set as a long period, a deterioration in the accuracy of determination resulting from fuel injection from the fuel injection valves 20 is not caused.

With this point taken into account, in the apparatus according to this embodiment of the invention, a period from BTDC 90°CA of the specific cylinder to ATDC 90°CA of the specific cylinder is set as a detection period during the performance of such fuel cut control. Then, on the basis of the speed V of decrease in the fuel pressure PQ detected by the pressure sensor 41 that is provided in a manner corresponding to the specific cylinder during this detection period, it is determined whether or not there has occurred an abnormality of fuel leakage in the fuel supply system. Thus, as the detection period during the performance of fuel cut control, a period that does not cause a deterioration in the accuracy of determination resulting from fuel injection from the respective fuel injection valves 20 and that is longer than when the fuel cut control is not performed can be determined. Accordingly, it can be determined with high accuracy whether or not there has occurred an abnormality of fuel leakage.

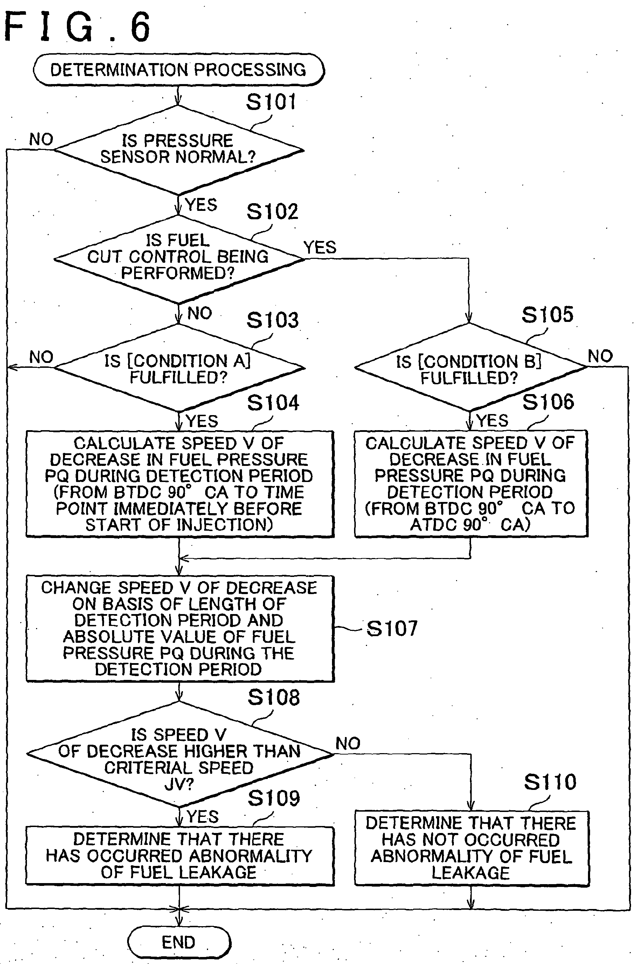

The procedure (operation) of performing a determination processing of determining whether or not there has occurred an abnormality of fuel leakage will be described hereinafter in detail with reference to a flowchart shown in FIG. 6. Incidentally, a series of processes shown in this flowchart are periodically executed by the electronic control unit 40, for example, as time interruption at intervals of a predetermined time. This determination processing is performed for each of the cylinders 11, using a corresponding one of the pressure sensors 41 that are provided in a manner corresponding thereto.

As shown in FIG. 6, in this processing, it is first determined whether or not there has failed to occur an abnormality in the pressure sensor 41 (step S101). Then, if there has occurred an abnormality in the pressure sensor 41 (step S101: NO), the present processing is temporarily ended without executing the subsequent processes. On the other hand, if the pressure sensor 41 is normal (step S101: YES), it is determined whether or not fuel cut control is being performed (step S102).

Then, if fuel cut control is not being performed (step S102: NO), it is determined whether or not a [Condition A] shown below is fulfilled (step S103).

[Condition A] That fuel injection from the fuel injection valves 20 be completed.

If this [Condition A] is not fulfilled (step S103: NO), the present processing is temporarily ended without executing the subsequent processes. If the [Condition A] is thereafter fulfilled through the repeated performance of the present processing (step S103: YES), the speed V of decrease is calculated (step S104), on the assumption that the detection period has already been determined because fuel injection from the fuel injection valves 20 is completed, and that the speed V of decrease in the fuel pressure PQ has not been calculated yet on the basis of the fuel pressure PQ detected during the detection period.

On the other hand, when fuel cut control is being performed (step S102: YES), it is determined whether or not a [Condition B] shown below is fulfilled (step S105).

[Condition B] That the crank angle be larger than ATDC 90°CA.

If this [Condition B] is not fulfilled (step S105: NO), the present processing is temporarily ended without executing the subsequent processes. If the [Condition B] is thereafter fulfilled through the repeated performance of the present processing (step S105: YES), the speed V of decrease is calculated (step S106) on the assumption that the detection period has already been determined because the crank angle is larger than ATDC 90°CA, and that the speed V of decrease in the fuel pressure PQ has not been calculated yet on the basis of the fuel pressure PQ detected during the detection period.

Then, after the speed V of decrease in the fuel pressure PQ is thus calculated (step S104 or step S106), the speed V of decrease is changed on the basis of the length of the determination period and the absolute value of the fuel pressure PQ during the determination period (more specifically, BTDC 90°CA) (step S107). In the apparatus according to this embodiment of the invention, as a relationship among the unchanged speed V of decrease, the length of the determination period, the absolute value of the fuel pressure PQ during the determination period, and the changed speed V of decrease, a relationship that makes it possible to accurately determine, on the basis of results of various experiments and simulations, whether or not there has occurred an abnormality of fuel leakage is obtained in advance, and is stored into the electronic control unit 40. In the process of step S107, the changed speed V of decrease is calculated on the basis of this relationship. More specifically, the changed speed V of decrease is calculated as a speed that decreases as the detection period shortens and as the absolute value of the fuel pressure PQ during the detection period increases.

After that, it is determined whether or not the speed V of decrease thus changed is higher than the criterial speed JV (step S108). Incidentally, in the apparatus according to this embodiment of the invention, as the aforementioned criterial speed JV, a certain value that makes it possible to properly determine, on the basis of results of various experiments and simulations, there has occurred an abnormality of fuel leakage in the fuel supply system is obtained in advance, and is stored into the electronic control unit 40.

Then, if the speed V of decrease in the fuel pressure PQ is higher than the criterial speed JV (step S108: YES), it is determined that there has occurred an abnormality of fuel leakage (step S109). In passing, in this case, a history of the occurrence of an abnormality of fuel leakage is stored into the electronic control unit 40, and a warning lamp (not shown) is lit up. On the other hand, if the speed V of decrease in the fuel pressure PQ is equal to or lower than the criterial speed JV (step S108: NO), it is determined that there has not occurred an abnormality of fuel leakage (step S110). After it is thus determined whether or not there has occurred an abnormality of fuel leakage, the present processing is temporarily ended.

As described above, according to this embodiment of the invention, effects described below are obtained. (1) Each of the fuel injection valves 20 is individually fitted with a corresponding one of the pressure sensors 41 for detecting the fuel pressure PQ. Besides, as a detection period during which the fuel pressure PQ used to determine whether or not there has occurred an abnormality of fuel leakage is detected, the period from the intermediate timing between the respective compression top dead center timings in the two cylinders 11 that are successive to each other in ignition sequence to the timing immediately before the start of fuel injection into the cylinder 11 that is later in ignition sequence is determined. In addition, it is determined, on the basis of the speed V of decrease in the fuel pressure PQ detected by the pressure sensor 41 provided in a manner corresponding to the aforementioned specific cylinder during the detection period, whether or not there has occurred an abnormality of fuel leakage. Thus, the fuel pressure PQ is detected during the period in which the amplitude of fluctuations in the fuel pressure PQ resulting from fuel injection from the fuel injection valves 20 has converged to a small value, and it is determined whether or not there has occurred an abnormality of fuel leakage in the fuel supply system. Thus, a decrease in the fuel pressure PQ resulting from the occurrence of an abnormality of fuel leakage can be properly captured. Thus, it can be accurately determined, on the basis of the speed of decrease in the fuel pressure PQ, whether or not there has occurred an abnormality of leakage.
(2) The speed V of decrease in the fuel pressure PQ during the detection period is calculated, and it is determined that there has occurred an abnormality of fuel leakage when the speed V of decrease is higher than the predetermined criterial speed JV. Thus, it is determined that there has occurred an abnormality of fuel leakage, on the condition that the speed V of decrease in the fuel pressure PQ be high as a result of the leakage of fuel from inside the fuel supply system.
(3) Prior to a comparison between the speed V of decrease in the fuel pressure PQ and the criterial speed JV, the speed V of decrease is changed on the basis of the length of the determination period. Thus, the speed V of decrease can be changed in accordance with the degree of the influence of the length of the detection period on the aforementioned speed V of decrease, and it can be suitably determined, on the basis of the changed speed V of decrease, whether or not there has occurred an abnormality of fuel leakage.
(4) Prior to a comparison between the speed V of decrease in the fuel pressure PQ and the criterial speed JV, the speed V of decrease is changed on the basis of the absolute value of the fuel pressure PQ. Thus, the speed V of decrease can be changed in accordance with the relationship between the absolute value of the fuel pressure PQ during the detection period and the unchanged speed V of decrease, and it can be suitably determined, on the basis of the changed speed V of decrease, whether or not there has occurred an abnormality of fuel leakage.
(5) As a detection period during the performance of fuel cut control, the period from BTDC 90°CA of the specific cylinder to ATDC 90°CA of the specific cylinder is set, and it is determined, on the basis of the speed V of decrease in the fuel pressure PQ detected by the pressure sensor 41 that is provided in a manner corresponding to the specific cylinder during the detection period, whether or not there has occurred an abnormality of fuel leakage in the fuel supply system. Thus, as the detection period during the performance of fuel cut control, a period that does not cause a deterioration in the accuracy of determination resulting from fuel injection from the respective fuel injection valves 20 and that is longer than when the fuel cut control is not performed can be determined. Accordingly, it can be determined with high accuracy whether or not there has occurred an abnormality of fuel leakage.
(6) Each of the pressure sensors 41 is integrally fitted to a corresponding one of the fuel injection valves 20. Thus, as the fuel pressure PQ detected by each of the pressure sensors 41, a value with a reduced influence of fluctuations in the fuel pressure that are caused as the fuel injection valves 20 provided in a manner corresponding to the other cylinders 11 are driven to be opened/closed can be detected. Accordingly, the amplitude of fluctuations in the fuel pressure PQ during the aforementioned detection period is smaller than in an apparatus that detects a fuel pressure in a region far from the fuel injection valves 20. Therefore, it can be accurately determined whether or not there has occurred an abnormality of fuel leakage.

Incidentally, the foregoing embodiment of the invention may be carried out after being modified as follows. As the absolute value of the fuel pressure PQ during the detection period, it is possible to use the fuel pressure PQ at an arbitrary crank angle (e.g., one of the plurality of the detection points) during the detection period or an average of the fuel pressures PQ during the detection period, instead of using the fuel pressure PQ at the start point (BTDC 90°CA) of the detection period.

The criterial speed JV may be changed instead of or in addition to changing the speed V of decrease in the fuel pressure PQ on the basis of the length of the detection period and the absolute value of the fuel pressure PQ during the detection period. In this case, the criterial speed JV may be changed to a high speed such that the likelihood of determining that there has occurred an abnormality of fuel leakage decreases, for example, as the detection period shortens or as the absolute value of the fuel pressure PQ during the detection period increases.

The process of step S107 in FIG 6 can be arbitrarily modified or omitted. More specifically, if the influence of the length of the detection period is small, the process of changing the speed V of decrease or the criterial speed JV on the basis of the length of the detection period may be omitted. Besides, if the influence of the absolute value of the fuel pressure PQ during the detection period is small, the process of changing the speed V of decrease or the criterial speed JV on the basis of the absolute value can be omitted.

It is also appropriate to read two of the fuel pressures PQ detected during the determination period, calculate a gradient of a line joining those fuel pressures PQ to each other, and use the obtained gradient as a speed of decrease in the fuel pressure PQ. Incidentally, as the two fuel pressures PQ, for example, the fuel pressure PQ at BTDC 90°CA and the fuel pressure PQ during the outputting of a drive pulse can be adopted when fuel cut control is not performed, and the fuel pressure PQ at BTDC 90°CA and the fuel pressure PQ at ATDC 90°CA can be adopted when fuel cut control is performed. Besides, the amount of decrease in the fuel pressure PQ during the detection period may be calculated instead of calculating the speed V of decrease in the detected fuel pressure PQ during the detection period. In this case, it can be determined that there has occurred an abnormality of fuel leakage in the fuel supply system, on the condition that the amount of decrease in the fuel pressure PQ during the detection period be larger than a predetermined criterial amount. In short, an indexical value of a pattern of decrease in the fuel pressure PQ detected during the detection period and a criterial value with which the indexical value is compared may be determined such that it can be accurately determined, on the basis of the pattern of decrease, whether or not there has occurred an abnormality of fuel leakage.

In the foregoing embodiment of the invention, BTDC 90°CA and ATDC 90°CA of one of the cylinders 11 is set as "the intermediate point between the compression top dead centers of the two cylinders 11 that are successive to each other in ignition sequence", "the intermediate point between the compression top dead center of the cylinder that immediately precedes the specific cylinder in ignition sequence and the compression top dead center of the specific cylinder", or "the intermediate point between the compression top dead center of the specific cylinder and the compression top dead center of the cylinder that immediately follows the specific cylinder in ignition sequence". The invention is not limited to this configuration. It is also appropriate to set crank angles that are slightly different from those values, namely, BTDC 90°CA and ATDC 90°CA.

The timing at which a drive pulse is output is not absolutely required to be set as an end point of the detection period when fuel cut control is not performed. It is also appropriate to set a timing that is slightly before or after that timing. In short, no problem is caused if a timing immediately before the start of fuel injection from the fuel injection valves 20, in other words, a timing immediately before the start of a decrease in the fuel pressure PQ that is caused as the fuel injection valves 20 are opened can be set as the aforementioned end point.

It is also appropriate to refrain from determining whether or not there has occurred an abnormality of fuel leakage when fuel cut control is performed. Although the determination processing (FIG 6) is individually performed as to each of the cylinders 11 in the foregoing embodiment of the invention, it is also appropriate to perform the determination processing only as to a predetermined one of the cylinders 11.

The fitting positions of the pressure sensors 41 can be arbitrarily changed to, for example, the branch passages 31a or the like, as long as fuel pressures in regions between regions that are closer to the fuel injection valve 20 sides than the common rail 34 and the injection holes 23 of the fuel injection valves 20 can be detected.

Instead of the fuel injection valves that are designed to be driven by the piezoelectric actuators, for example, fuel injection valves that are designed to be driven by electromagnetic actuators that are equipped with solenoid coils or the like can be adopted as well.

The invention is applicable to an internal combustion engine having two cylinders, an internal combustion engine having three cylinders, or an internal combustion engine having five or more cylinders, as well as an internal combustion engine having four cylinders.

The invention is applicable to a gasoline engine that uses gasoline fuel, and a natural gas engine that uses natural gas fuel, as well as a diesel engine.

## Claims

1. An abnormality determination apparatus for a fuel supply system, wherein the fuel supply system has a pressure accumulation container (34) that stores fuel in a pressurized state, and fuel injection valves (20) that are provided respectively for cylinders (11) of a direct injection-type internal combustion engine and connected individually to the pressure accumulation container (34),
the abnormality determination apparatus **characterized by** comprising pressure detection portions (41) that are provided respectively for the cylinders (11) and detect fuel pressures in regions between regions that are located closer to the fuel injection valve sides than the pressure accumulation container and injection holes of the fuel injection valves inside the fuel supply system, wherein
the abnormality determination apparatus detects, during a detection period from an intermediate timing between respective compression top dead center timings of two of the cylinders (11) that are successive to each other in ignition sequence to a timing immediately before start of fuel injection into that one of those cylinders (11) which is later in ignition sequence, a fuel pressure by the pressure detection portion (41) that is provided for the cylinder (11) that is later in ignition sequence, and
the abnormality determination apparatus determines, on a basis of a pattern of decrease in the detected fuel pressure, whether or not there has occurred an abnormality of fuel leakage.

2. The abnormality determination apparatus according to claim 1, wherein
the abnormality determination apparatus calculates a speed of decrease in the fuel pressure during the detection period as the pattern of decrease, and determines that the abnormality of fuel leakage has occurred when the speed of decrease is higher than a predetermined criterial speed.

3. The abnormality determination apparatus according to claim 2, wherein
the abnormality determination appratus changes the speed of decrease on a basis of a length of the detection period.

4. The abnormality determination apparatus according to claim 2 or 3, wherein
the abnormality determination apparatus changes the speed of decrease on a basis of an absolute value of the fuel pressure during the detection period.

5. The abnormality determination apparatus according to any one of claims 1 to 4, wherein
the abnormality determination apparatus sets a detection period when fuel cut control is performed to temporarily stop fuel injection from the fuel injection valves (20), a start point of the detection period is an intermediate timing between a compression top dead center timing of the cylinder (11) that immediately precedes a specific one of the cylinders (11) in ignition sequence and a compression top dead center timing of the specific cylinder (11), and an end point of the detection period is an intermediate timing between the compression top dead center timing of the specific cylinder (11) and a compression top dead center timing of the cylinder (11) that immediately follows the specific cylinder (11) in ignition sequence,
the abnormality determination apparatus detects a fuel pressure by the pressure detection portion (41) that is provided for the specific cylinder (11) during the detection period, and
the abnormality determination apparatus determines, on a basis of a pattern of decrease in the detected fuel pressure, whether or not the abnormality of fuel leakage has occurred.

6. The abnormality determination apparatus according to any one of claims 1 to 5, wherein the pressure detection portions (41) are pressure sensors that are fitted to the fuel injection valves (20).

7. An abnormality determination method for a fuel supply system, wherein the fuel supply system has a pressure accumulation container (34) that stores fuel in a pressurized state, and fuel injection valves (20) that are provided respectively for cylinders (11) of a direct injection-type internal combustion engine and connected individually to the pressure accumulation container (34), the abnormality determination method **characterized by** comprising:
detecting, during a detection period from an intermediate timing between respective compression top dead center timings of two of the cylinders (11) that are successive to each other in ignition sequence to a timing immediately before start of fuel injection into that one of those cylinders (11) which is later in ignition sequence, fuel pressure in region between region that is located closer to the fuel injection valve (20) side than the pressure accumulation container (34) and injection hole of the fuel injection valve (20) inside the fuel supply system corresponding to the cylinder (11) that is later in ignition sequence; and
determining whether or not there has occurred an abnormality of fuel leakage on a basis of a pattern of decrease in the detected fuel pressure.

## Patentansprüche

1. Abnormalitätsbestimmungsvorrichtung für ein Kraftstoffzufuhrsystem, wobei das Kraftstoffzufuhrsystem einen Drucksammelbehälter (34), der Kraftstoff in einem unter Druck gesetzten Zustand speichert, und Kraftstoffeinspritzventile (20) hat, die jeweils für Zylinder (11) einer Brennkraftmaschine der Direkteinspritzungsbauart vorgesehen sind und einzeln mit dem Drucksammelbehälter (34) verbunden sind,
wobei die Abnormalitätsbestimmungsvorrichtung **dadurch gekennzeichnet ist, dass** die Vorrichtung Druckerfassungsabschnitte (41) aufweist, die jeweils für die Zylinder (11) vorgesehen sind und Kraftstoffdrücke in Bereichen zwischen Bereichen, die näher an der Seite des Kraftstoffeinspritzventils als der Drucksammelbehälter gelegen sind, und Einspritzlöchern der Kraftstoffeinspritzventile im Inneren des Kraftstoffzufuhrsystems erfassen, wobei
die Abnormalitätsbestimmungsvorrichtung während einer Erfassungszeitspanne von einem Zwischenzeitpunkt zwischen den jeweiligen Zeitpunkten der oberen Verdichtungstotpunkte von zwei der Zylinder (11), die in einer Zündfolge einander folgen, bis zu einem Zeitpunkt unmittelbar vor einem Beginn einer Kraftstoffeinspritzung in den einen von diesen Zylindern (11), der später in der Zündfolge ist, einen Kraftstoffdruck durch den Druckerfassungsabschnitt (41), der für den in der Zündfolge späteren Zylinder (11) vorgesehen ist, erfasst, und
die Abnormalitätsbestimmungsvorrichtung auf einer Basis eines Musters einer Verringerung des erfassten Kraftstoffdrucks bestimmt, ob eine Abnormalität eines Kraftstoffverlusts dort stattgefunden hat oder nicht.

2. Abnormalitätsbestimmungsvorrichtung gemäß Anspruch 1, wobei die Abnormalitätsbestimmungsvorrichtung eine Geschwindigkeit einer Verringerung des Kraftstoffdrucks während der Erfassungszeitspanne als das Muster einer Verringerung berechnet und bestimmt, dass die Abnormalität eines Kraftstoffverlusts stattgefunden hat, wenn die Geschwindigkeit einer Verringerung höher als eine vorbestimmte kritische Geschwindigkeit ist.

3. Abnormalitätsbestimmungsvorrichtung gemäß Anspruch 2, wobei die Abnormalitätsbestimmungsvorrichtung die Geschwindigkeit einer Verringerung auf einer Basis einer Länge der Erfassungszeitspanne ändert.

4. Abnormalitätsbestimmungsvorrichtung gemäß Anspruch 2 oder 3, wobei
die Abnormalitätsbestimmungsvorrichtung die Geschwindigkeit einer Verringerung auf einer Basis eines Absolutwerts des Kraftstoffdrucks während der Erfassungszeitspanne ändert.

5. Abnormalitätsbestimmungsvorrichtung gemäß einem der Ansprüche 1 bis 4, wobei
die Abnormalitätsbestimmungsvorrichtung eine Erfassungszeitspanne festlegt, wenn eine Kraftstoffunterbrechungssteuerung durchgeführt wird, um eine Kraftstoffeinspritzung von den Kraftstoffeinspritzventilen (20) vorübergehend anzuhalten, wobei ein Startpunkt der Erfassungszeitspanne ein Zwischenzeitpunkt zwischen einem Zeitpunkt des oberen Verdichtungstotpunkts des Zylinders (11), der einem spezifischen der Zylinder (11) in einer Zündfolge unmittelbar vorangeht, und einem Zeitpunkt des oberen Verdichtungstotpunkts des spezifischen Zylinders (11) ist, und ein Endpunkt der Erfassungszeitspanne ein Zwischenzeitpunkt zwischen dem Zeitpunkt des oberen Verdichtungstotpunkts des spezifischen Zylinders (11) und einem Zeitpunkt des oberen Verdichtungstotpunkts des Zylinders (11) ist, der in einer Zündfolge dem spezifischen Zylinder (11) unmittelbar folgt,
die Abnormalitätsbestimmungsvorrichtung einen Kraftstoffdruck durch den Druckerfassungsabschnitt (41), der für den spezifischen Zylinder (11) vorgesehen ist, während der Erfassungszeitspanne erfasst, und
die Abnormalitätsbestimmungsvorrichtung auf einer Basis eines Musters einer Verringerung des erfassten Kraftstoffdrucks bestimmt, ob eine Abnormalität eines Kraftstoffverlusts stattgefunden hat oder nicht.

6. Abnormalitätsbestimmungsvorrichtung gemäß einem der Ansprüche 1 bis 5, wobei die Druckerfassungsabschnitte (41) Drucksensoren sind, die an den Kraftstoffeinspritzventilen (20) befestigt sind.

7. Abnormalitätsbestimmungsverfahren für ein Kraftstoffzufuhrsystem, wobei das Kraftstoffzufuhrsystem einen Drucksammelbehälter (34), der Kraftstoff in einem unter Druck gesetzten Zustand speichert, und Kraftstoffeinspritzventile (20) hat, die jeweils für Zylinder (11) einer Brennkraftmaschine der Direkteinspritzungsbauart vorgesehen sind und einzeln mit dem Drucksammelbehälter (34) verbunden sind, wobei das Abnormalitätsbestimmungsverfahren **dadurch gekennzeichnet ist, dass** es folgende Schritte aufweist:
Erfassen während einer Erfassungszeitspanne von einem Zwischenzeitpunkt zwischen den jeweiligen Zeitpunkten der oberen Verdichtungstotpunkte von zwei der Zylinder (11), die in einer Zündfolge einander folgen, bis zu einem Zeitpunkt unmittelbar vor einem Beginn einer Kraftstoffeinspritzung in den einen von diesen Zylindern (11), der später in der Zündfolge ist, eines Kraftstoffdrucks in einem Bereich zwischen einem Bereich, der näher an der Seite des Kraftstoffeinspritzventils (20) als der Drucksammelbehälter (34) gelegen ist, und einem Einspritzloch des Kraftstoffeinspritzventils (20) im Inneren des Kraftstoffzufuhrsystems korrespondierend zu dem Zylinder (11), der später in einer Zündfolge ist; und
Bestimmen auf einer Basis eines Musters einer Verringerung des erfassten Kraftstoffdrucks, ob eine Abnormalität eines Kraftstoffverlusts stattgefunden hat oder nicht.

## Revendications

1. Appareil de détermination d'anomalie pour un système d'alimentation en carburant, dans lequel le système d'alimentation en carburant a un récipient d'accumulation de pression (34) stockant le carburant dans un état sous pression et des soupapes d'injection de carburant (20) respectivement prévues pour les cylindres (11) d'un moteur à combustion interne de type à injection directe et reliées individuellement au récipient d'accumulation de pression (34) ;
l'appareil de détermination d'anomalie est **caractérisé en ce qu'**il comprend des parties de détection de pression (41) prévues respectivement pour les cylindres (11) et détectant les pressions de carburant dans les régions situées entre les régions positionnées plus près des côtés de soupape d'injection de carburant que le récipient d'accumulation de pression et des trous d'injection des soupapes d'injection de carburant, à l'intérieur du système d'alimentation en carburant, dans lequel :
l'appareil de détermination d'anomalie détecte, pendant une période de détection allant d'un moment intermédiaire entre les moments de point mort haut de compression respectifs de deux des cylindres (11) se suivant l'une l'autre dans la séquence d'allumage jusqu'à un moment précédant immédiatement le début de l'injection de carburant dans celui des cylindres (11) arrivant plus tard dans la séquence d'allumage, une pression de carburant par la partie de détection de pression (41) prévue pour le cylindre (11) arrivant plus tard dans séquence d'allumage ; et
l'appareil de détermination d'anomalie détermine, sur une base d'un modèle de diminution, dans la pression de carburant détectée, si oui ou non une anomalie de fuite de carburant s'est produite.

2. Appareil de détermination d'anomalie selon la revendication 1, dans lequel l'appareil de détermination d'anomalie calcule une vitesse de diminution dans la pression de carburant pendant la période de détection comme modèle de diminution et détermine que l'anomalie de fuite de carburant s'est produite lorsque la vitesse de diminution est supérieure à une vitesse dépendant de critères prédéterminés.

3. Appareil de détermination d'anomalie selon la revendication 2, dans lequel l'appareil de détermination d'anomalie change la vitesse de diminution sur la base d'une longueur de la période de détection.

4. Appareil de détermination d'anomalie selon la revendication 2 ou 3, dans lequel l'appareil de détermination d'anomalie change la vitesse de diminution sur la base d'une valeur absolue de la pression de carburant pendant la période de détection.

5. Appareil de détermination d'anomalie selon l'une quelconque des revendications 1 à 4, dans lequel :
l'appareil de détermination d'anomalie définit une période de détection lorsque la commande de coupure de carburant est exécutée pour arrêter temporairement l'injection de carburant provenant des soupapes d'injection de carburant (20), un point de départ de la période de détection étant un moment intermédiaire entre un moment de point mort haut de compression du cylindre (11) précédant immédiatement un cylindre spécifique parmi les cylindres (11) dans la séquence d'allumage et un moment de point mort haut de compression du cylindre (11) spécifique et un point de fin de la période de détection étant un moment intermédiaire entre le moment de point mort haut de compression du cylindre (11) spécifique et un moment de point mort haut de compression du cylindre (11) suivant immédiatement le cylindre (11) spécifique dans la séquence d'allumage ;
l'appareil de détermination d'anomalie détecte une pression de carburant par la partie de détection de pression (41) prévue pour le cylindre (11) spécifique pendant la période de détection ; et
l'appareil de détermination d'anomalie détermine, sur la base d'un modèle de diminution dans la pression de carburant détectée, si oui ou non l'anomalie de fuite de carburant s'est produite.

6. Appareil de détermination d'anomalie selon l'une quelconque des revendications 1 à 5, dans lequel les parties de détection de pression (41) sont des capteurs de pression fixés aux soupapes d'injection de carburant (20).

7. Procédé de détermination d'anomalie pour un système d'alimentation en carburant, dans lequel le système d'alimentation en carburant a un récipient d'accumulation de pression (34) stockant du carburant dans un état sous pression et des soupapes d'injection de carburant (20) respectivement prévues pour les cylindres (11) d'un moteur à combustion interne de type à injection directe et reliées individuellement au récipient d'accumulation de pression (34), le procédé de détermination d'anomalie étant **caractérisé en ce qu'**il comprend :
la détection, pendant une période de détection allant d'un moment intermédiaire entre les moments de point mort haut de compression respectifs de deux cylindres parmi les cylindres (11) se suivant l'un l'autre dans la séquence d'allumage jusqu'à un moment précédent immédiatement l'injection de carburant dans le cylindre (11) arrivant plus tard dans la séquence d'allumage, la pression de carburant dans la région située entre la région positionnée plus près du côté de soupape d'injection de carburant (20) que le récipient d'accumulation de pression (34) et le trou d'injection de la soupape d'injection de carburant (20) à l'intérieur du système d'alimentation en carburant correspondant au cylindre (11) arrivant après dans la séquence d'allumage ; et
la détermination de si oui ou non une anomalie de fuite de carburant s'est produite sur la base d'un modèle de diminution dans la pression de carburant détectée.
